# EUROPEAN PATENT SPECIFICATION

(11) **EP 0 329 633 B1**
(45) Date of publication and mention of the grant of the patent: **27.10.1993**
(21) Application number: 89850049.1
(22) Date of filing: 13.02.1989
(51) Int. Cl.: B23B 31/30

(54) **A tool holder for a tool-bit provided with a shaft**
Werkzeughalter für ein Werkzeug mit Schaft
Porte-outil pour un outil comportant une queue

(30) Priority: 19.02.1988 SE 8800572
(43) Date of publication of application: 23.08.1989
(73) Proprietor: SPIREX TOOLS AB, S-703 56 Örebro (SE)
(72) Inventor: Danielsen, Jan, 703 56 Orebro (SE)
(74) Representative: Lautmann, Kurt O.

(56) References cited:
- GB-A- 833 048
- US-A- 3 202 432
- US-A- 3 994 614

## Description

The present invention relates to a tool holder for a tool-bit according to the precharacterizing portion of the claim, see US-A-3994614.

A tool holder is normally arranged in a machine of one type or another. The machine may be a drill or a machine for milling or for some other mechanical machining process such as grinding. The tool holder generally has an upper end provided with tapping enabling it to be screwed into the machine. The upper part is generally conical, but may be cylindrical, and is provided with tapping at its upper end. A chuck of some sort is usually fitted at the lower end of the tool holder. The tool-bit with shaft is inserted into the chuck and is secured there by a number of elements which, by means of a hand tool operated by the user, can be caused to exert a clamping action. This can also be achieved by mechanical means. If the recess in the chuck is too large a sleeve is inserted into the recess, the sleeve having the same outer diameter as the chuck's inner diameter. The inner cross section of the sleeve is adjusted to the cross section of the tool-bit to be used. The retention of a tool-bit is dependent on the force with which a user can secure the tool-bit or which can be achieved by mechanical means. This force is often insufficient and the tool-bit may spin or loosen.

The present invention relates to a tool holder of the above-mentioned type in which the retaining force for a tool-bit with shaft may be 10,000 NM and more, reaching extremely high values in an extremely simple manner which does not require great manual or mechanical force. This is achieved by a tool holder according to the claim.

According to an advantageous embodiment, the cavity is connected to a container which may be in the form of a tube. Other pressure-generating means are also possible, perhaps containing transmission means. Said cavity and said tube are filled with pressure medium, preferably oil or grease. Since the volume of the pressure medium is substantially constant, inserting an organ with different depths of penetration, into said tube will force the inner wall of the recess to bulge out, thus producing a retaining force for the tool-bit inserted either directly or indirectly through a sleeve of optional material such as metal, rubber or plastic.

Both the upper part of the tool holder and the unit with the cavity are provided with outwardly directed flanges which can be joined together, for instance by means of a screw joint.

If the recess for receiving a tool-bit is too wide, a sleeve is inserted in the recess, said sleeve having the same outer diameter as the recess and an inner diameter corresponding to the tool-bit to be used.

The pressure medium in the cavity and in the pressure medium source can easily be displaced, thus influencing the inner wall of the recess, the situation being influenced, for instance, by the insertion of a plug into the pressure medium source. Said plug may be provided with a screw thread and need then only be screwed in or out in order to ensure retention of a tool-bit. The pressure medium can also be influenced by a piston, the movement of which can be achieved in one way or another. The cavity may also be connected by a hose connection to a pressure medium source located some distance away.

According to the invention a retaining torque of 10,000 NM can be achieved extremely easily and using very little force.

Other features characteristic of the invention are revealed in the accompanying claims.

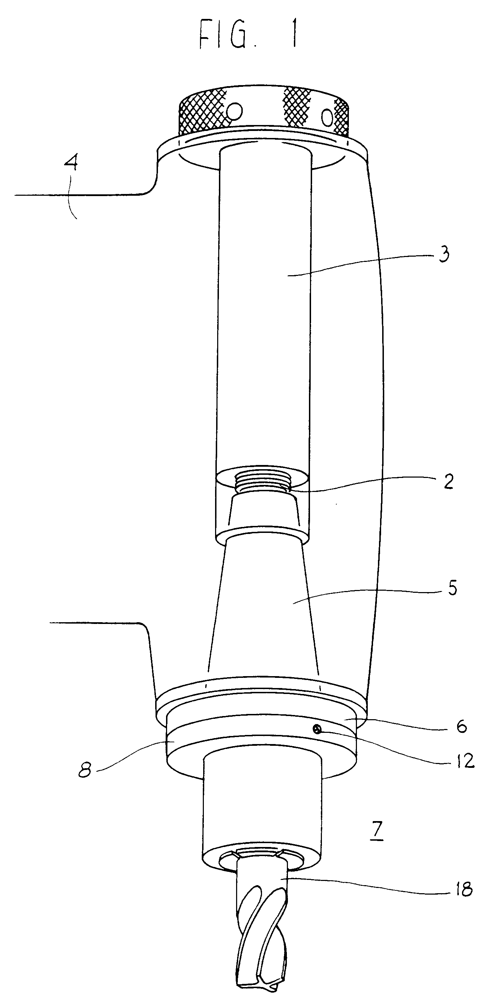

The present invention will be described in more detail with reference to the two sheets of drawings in which
- Figure 1: shows a motor head provided with a tool holder in accordance with the invention, and

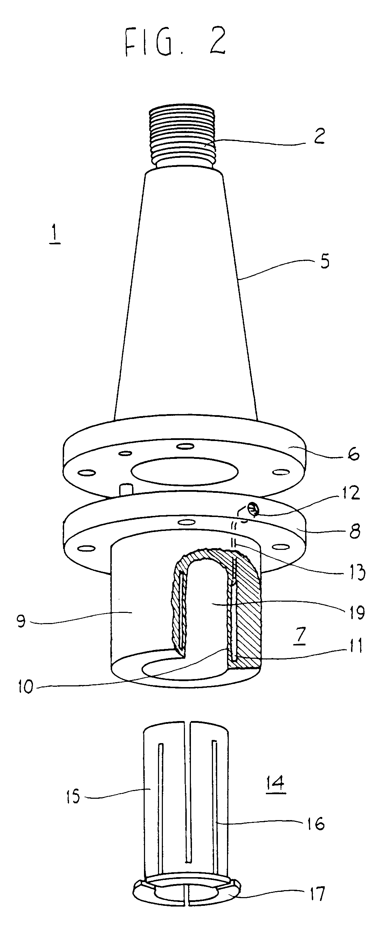

- Figure 2: shows an exploded view of said tool holder.

In the drawings 1 is a tool holder, the upper portion of which is provided with threading 2 for screwing into a leading spindle 3 arranged in a motor head 4, the spindle being connected to a drive motor. The tool holder is shaped conically after the threaded portion 2. The conical portion is designated 5 and is intended for insertion into a conical recess in the motor head 4.

The upper portion of the tool holder 1 is provided at the bottom with a radially outwardly directed flange 6 which shall cooperate in securing a separate unit 7 containing retention means for a tool-bit. The part 7 is provided at the top with a radially outwardly directed peripheral flange for cooperation with the peripheral flange 6. The two flanges are secured together by one or more screw joints or other suitable attachment means. The unit 7 comprises a tubular part 9 with a recess 19. The tubular part 9 has a thin inner wall 10, behind which is an annular cavity 11. The annular cavity 11 communicates with a channel 13, closed at the top by an adjustment screw 12. The total volume of the annular cavity 11 and the channel 13 is determined by the adjustment screw 12 and can thus be altered. If the annular cavity and the channel 13 are filled with a pressure medium such as oil, there is minimum air in said total space, and the adjustment screw 12 assumes its outermost position, the result of the screw being screwed in will be a decrease in the total original space and the inner wall 10 will therefore move inwards. This is because the oil demands a substantially constant amount of space and, since the inner wall 10 is forced inwards, the shaft of a tool-bit 18 inserted in the recess 19 will be clamped with considerable force. If the cross section of the recess is too large for a tool-bit, a sleeve 14 having a cross section corresponding to that of the recess 19 and an inner cross section corresponding to the cross section of the tool-bit can be inserted in the recess 19. The sleeve has a tubular portion 15 provided with a number of slits 16, and having a peripheral flange 17 at the bottom to limit its insertion into the recess 19.

In the present case the recess 19 is cylindrical. However, the recess may obviously have any cross section, e.g. polygonal. Furthermore, the cross section of the recess 19 may be identical along its length, but it might also decrease from the outside and inwards. In this case the sleeve 14 must be adjusted thereto.

The aperture in the sleeve 14 for receiving a tool-bit may have a cross section corresponding to the tool-bit being used, and its cross section may vary along its length.

The sleeve 14 may be of any material, e.g. metal, plastic, rubber or other suitable materials. Further, the tool holder enables delicate materials such as glass or similar materials to be retained. The tool holder itself is illustrated in the drawings as conical, but it should be evident that it may also be cylindrical.

The volume of the cavity 11 containing pressure medium is altered by the plug mentioned earlier. However, this plug may cooperate with a piston. The cavity may also be connected by a hose to a pressure medium located some distance away. The pressure medium is preferably oil, but might also consist of grease and in certain cases the pressure medium may be gaseous, consisting of helium, for instance.

As mentioned previously, the recess for receipt of a tool-bit is generally cylindrical but may also be conical, the diameter decreasing from the opening and upwardly.

## Claims

1. A tool holder (1) for a tool bit (18) having a shaft designed to be inserted into a recess (19) in the tool holder,
the tool holder (1) having means for fixing the shaft in the recess,
the tool holder (1) being provided with a conical or cylindrical attachment (5) intended to be secured to the drive means (3) of a machining tool,
the tool holder (1) consisting of two parts (5 and 9) arranged one after the other, one (9) of the parts being a tubular part (9) containing said recess (19) and the other part (5) containing the attachment of the tool holder, the ends of the parts (5 and 9) abutting each other being provided with a transverse, outwardly directed peripheral flange (6 and 8) releasably joined together, preferably by a screw joint,
characterized in that said recess (19) has coherent wall (10) forming an integral portion of the tubular part (9) and that behind the coherent wall (10) there is a single, closed, annular cavity (11) filled with a pressure medium, thereby the cross section of the recess can be varied by adjusting means (12) permitting adjustment of the pressure of the pressure medium in order to clamp the shaft.

## Patentansprüche

1. Ein Werkzeughalter (1) für ein Schneidwerkzeug (18) mit einem Schaft, so konstruiert, daß es in eine Aussparung (19) im Werkzeughalter eingeführt wird und
der Werkzeughalter (1) Einrichtungen zum Befestigen des Schaftes in der Aussparung hat und
der Werkzeughalter (1) mit einem konischen oder zylindrischen Aufsatz (5) bestückt ist, der dafür vorgesehen ist, in der Antriebsvorrichtung (3) eines Bearbeitungswerkzeuges verriegelt zu werden; ein aus zwei, hintereinander angeordneten Teilen (5 und 9) bestehender Werkzeughalter (1), wobei eins der Teile (9) ein rohrförmiges Teil (9) mit besagter Aussparung (9) darstellt und das andere Teil (5) mit dem Aufsatz des Werkzeughalters und die Teile (5 und 9) mit ihren Endflächen gegeneinander gewendet und in Verbindung miteinander liegen, und mit einem querlaufenden, nach außen gerichteten Umfangsflansch (6 und 8) auseinandernehmbar miteinander verbunden sind, vorzugsweise mit einem Schraubverband, dadurch **gekennzeichnet,** daß die besagte Aussparung (19) eine zusammenhängende Wandung (19) hat, die einen integrierten Teil des rohrförmigen Teiles (9) ausmacht und daß hinter dem zusammenhängenden Teil (10) ein einfacher, verschlossener, ringförmiger und mit Druckmittel gefüllter Hohlraum (11) vorhanden ist, wodurch der Querschnitt der Aussparung mit einer Einstellvorrichtung (12) verstellt werden kann, die das Einstellen des Druckmitteldruckes erlaubt, um den Schaft festzuklemmen.

## Revendications

1. Un porte-outil (1) pour un foret (18) avec un arbre conçu pour insertion dans un évidement (19) dans le porte-outil, le porte-outil (1) étant pourvu de moyens pour fixer l'arbre dans l'évidement, le porte-outil (1) étant doté d'un attachement conique ou cylindrique (5) destiné à être ancré au dispositif d'entraînement (3) d'une machine-outil, le porte-outil comportant des pièces (5 et 9) agencées l'une après l'autre, l'une (9) des pièces étant une pièce tubulaire (9) contenant ledit évidement (19) et l'autre pièce (5) contenant l'attachement du porte-outil, les extrémités des pièces (5 et 9) se trouvant bout à bout l'une par rapport à l'autre, étant dotées d'une bride périphérique transversale, orientée vers l'extérieur (6 et 8), assemblées de manière démontable, de préférence au moyen d'un joint à vis, **caractérisé** en ce que ledit évidement (19) est doté d'une cloison cohérente (10) formant partie intégrante de la pièce tubulaire (9) et en ce que derrière la cloison cohérente (19) il y a une cavité (11) unique, fermée, annulaire, remplie d'un moyen de pression, la section transversale de l' évidement pouvant être variée par des moyens de réglage (12) permettant le réglage de la pression du moyen de pression de manière à fixer l'arbre.
